# EUROPÄISCHE PATENTANMELDUNG

(11) **EP 1 106 445 A1**
(43) Veröffentlichungstag der Anmeldung: **13.06.2001**
(21) Anmeldenummer: 00106617.4
(22) Anmeldetag: 28.03.2000
(51) Int. Cl.: B60R 21/20

(54) **In ein Innenverkleidungsteil für Kraftfahrzeuge integriertes Airbag-System**

(30) Priorität: 10.12.1999 EP 99124616
(71) Anmelder: ACTS Advanced Car Technology Systems GmbH & Co.KG, 63877 Sailauf (DE)
(72) Erfinder: Arleth, Matthias E. J., 63801 Kleinostheim (DE); Martin, Alex, 63739 Aschaffenburg (DE); Schmidt, Werner, 63755 Alzenau-Hörstein (DE); Kerkhoff, Dieter, 63773 Goldbach (DE); Rubart, Dirk, 22926 Ahrenburg (DE); Speck, Uwe, 63743 Aschaffenburg-Schweinheim (DE)
(74) Vertreter: Vinazzer, Edith, Dipl.-Ing.

(57) **Zusammenfassung**

Die Erfindung betrifft ein in ein Innenverkleidungsteil für Kraftfahrzeuge, insbesondere eine Instrumententafel (16), integriertes Airbag-System mit einem mittels eines Gasgenerators (8, 8', 8") aufblasbaren Airbag (5, 5'. 5"), wobei das Innenverkleidungsteil zumindest aus einem formstabilen Träger (1, 1', 1") besteht und eine sich unter dem Druck des sich mit Gas befüllenden Airbags (5, 5', 5") nach außen öffnende Airbag-Abdeckung (2, 2', 2") aufweist. Die Airbag-Abdeckung (2, 2', 2") ist flexibel und dem Druck des sich befüllenden Airbags (5, 5', 5") nachgebend ausgeführt. Der Airbag (5, 5', 5") ist unterhalb der Abdeckung (2, 2', 2") in einer mit dem Träger (1, 1', 1") verbundenen Aufnahme (4, 4', 4") angeordnet.

## Beschreibung

Die Erfindung betrifft ein in ein Innenverkleidungsteil für Kraftfahrzeuge, insbesondere eine Instrumententafel, integriertes Airbag-System mit einem mittels eines Gasgenerators aufblasbaren Airbag, wobei das Innenverkleidungsteil zumindest aus einem formstabilen Träger besteht und eine sich unter dem Druck des sich befüllenden Airbags nach außen öffnende Airbag-Abdeckung aufweist. Insbesondere betrifft die Erfindung ein Innenverkleidungsteil mit zumindest einem durch Aufreißlinien gebildeten definiert aufreißbaren Bereich in der Airbag-Abdeckung.

Es ist üblich, in die Instrumententafel eines Kraftfahrzeuges auch für den Beifahrer ein Airbagmodul unterzubringen. Dazu wird in der Instrumententafel zumindest eine im Auslösefall aufreißbare Klappe vorgesehen. Bei bekannten Ausführungen von Instrumententafeln bestehen diese aus einem formstabilen Träger aus Kunststoff, Holzfasern oder Metall, einer Deckschicht bzw. Außenhaut, insbesondere ebenfalls aus Kunststoff, gegebenenfalls auch aus Leder, die die dem Fahrzeuginneren zugewandte Seite bildet und daher als Dekorschicht ausgeführt ist, und einer Schaumstoffschicht, über die der Träger und die Deckschicht bzw. die Außenhaut miteinander verbunden sind. Bekannt ist es ferner, Instrumententafeln zumindest zum Teil aus Laminaten oder aus miteinander durch Kaschieren verbundenen Schichten herzustellen. Das Airbagmodul, bestehend aus dem eigentlichen Airbag und einem Gasgenerator, wird in der Regel unterhalb des Trägers auf dem Querträger des Kraftfahrzeuges abgestützt. Über Aufreißlinien, die meist als von der Rückseite des Trägers vorgenommene linienförmig verlaufende Materialschwächungen - Schnitte oder Einschnitte - im Träger ausgeführt sind und die gegebenenfalls auch bis in die Deckschicht bzw. Außenhaut reichen oder diese auch durchsetzen können, wird eine ein- oder zweiflügelige Klappe vorgegeben, die durch den sich befüllenden Airbag aufgesprengt wird. Dazu ist vorerst ein gewisser Druckaufbau erforderlich, welcher schließlich zu einem explosionsartigen Aufreißen des oder der Klappe(n) führt. Die derart in den Innenraum des Fahrzeuges aufgehenden harten Klappen können ein nicht unerhebliches Verletzungsrisiko für den Beifahrer darstellen, insbesondere wenn sich dieser zufällig "Out of Position" und somit in größerer Nähe zu den sich öffnenden Klappen und zum sich aufblasenden Airbag befindet.

Zur Verminderung des Verletzungsrisikos wird in der DE-U 299 11 205 vorgeschlagen, durch entsprechende Vorrichtungen in dem von der Querschnittsschwächung im Träger begrenzten Bereich der Airbag-Abdeckung das Material des Trägers und zumindest Teile der Schaumstoffschicht vor der Entfaltung des Airbags aus dessen Einwirkungsbereich zu entfernen und hinter das Innenverkleidungsteil zu bringen. Dazu wird ein mit dem Träger fest verbundenes Zugband vorgesehen, welches näherungsweise senkrecht zum Träger und parallel zur Querschnittsschwächung angreift und mit einer über einen Sensor auslösbaren Zugvorrichtung verbunden ist. Das Zugband kann sich bis in die Schaumstoffschicht erstrecken. Für die Zugvorrichtung können ein mit dem Airbag gemeinsam wirkender Auslösesensor oder auch getrennte pyrotechnische Druckgeneratoren vorgesehen werden. Mit dieser Lösung wäre somit sichergestellt, dass keine Materialanteile des Trägers in den Fahrgastraum des Fahrzeuges gelangen, was einen Teil der oben aufgezeigten Probleme lösen würde. Nachteilig bei dieser bekannten Lösung wäre noch, dass zusätzliche, von ihrer Funktion her auf die Funktion des Airbagmoduls abzustimmende Bauteile, die auch einer gesonderten Montage bedürfen, vorzusehen sind. Daran dürfte auch eine Umsetzung in die Praxis scheitern.

Aufgabe der Erfindung ist es, ein Airbag-System zu entwickeln, welches ein "sanftes" Öffnen des Innenverkleidungsteils und ein "sanftes" Auslösen des Airbags gewährleistet, keinen so großen Druckaufbau für das Öffnen der Abdeckung erfordert und es ermöglicht, den Airbag großflächig im Innenverkleidungsteil zu positionieren. Insbesondere soll erreicht werden, dass Fahrzeuginsassen, die sich in einer Unfallsituation zufällig in ungünstiger Position, demnach "Out of Position", befinden, ein deutlich verringertes Verletzungsrisiko haben.

Gelöst wird die gestellte Aufgabe erfindungsgemäß dadurch, dass die Airbag-Abdeckung flexibel und dem Druck des sich befüllenden Airbags nachgebend ausgeführt ist, und dass der Airbag unterhalb der Abdeckung in einer mit dem Träger verbundenen Aufnahme angeordnet ist.

Dabei ist zur Lösung der gestellten Aufgabe insbesondere vorgesehen, dass die Airbag-Abdeckung bzw. der aufreißbare Bereich derselben derart flexibel ausgeführt ist bzw. sind, dass der Airbag die Abdeckung bzw. den aufreißbaren Bereich, insbesondere unter Bildung einer Auswölbung, anhebt und entlang der Aufreißlinien abzieht.

Mit der Erfindung wird daher ein gegenüber den bislang bekannten Lösungen gänzlich neuer Weg beschritten. Es wird nämlich grundsätzlich davon Abstand genommen, den Airbag hinter dem Träger unterzubringen. Damit wird auch auf eine formstabile harte Abdeckklappe verzichtet, was die Verletzungsgefahr für die Insassen im Fahrzeug verringert. Die flexible und unter dem Druck des sich befüllenden Airbags nachgiebige Airbag-Abdeckung kann so ausgelegt werden, dass sie sich auch ohne Aufreißlinien auf eine Art und Weise öffnet, die eine gegenüber den bekannten Lösungen deutlich verringerte Verletzungsgefahr mit sich bringt. Von besonderem Vorteil ist es jedoch, wenn durch Aufreißlinien ein gezielter "Zieh-Effekt", also ein besonders weiches und schonendes Aufgehen der Abdeckung bzw. auch ein Wegziehen der Abdeckung vom Fahrzeuginsassen erreicht wird. Gerade in diesem Fall können mögliche Verletzungen einer Person, die sich "Out of Position" befindet, weitgehend vermieden werden.

Die Unteransprüche enthalten besonders vorteilhafte Ausgestaltungen und Weiterentwicklungen der Erfindung.

Von besonderem Vorteil ist es, wenn ein erfindungsgemäßes Airbag-System in der Instrumententafel für den Beifahrer vorgesehen wird. In diesem Fall kann nämlich das Abziehen des aufreißbaren Bereiches weg vom Beifahrer erfolgen und es kann zumindest die erste Phase des Befüllens und Entfaltens des Airbags in einem vom Beifahrer möglichst weit weg entfernten Bereich erfolgen. Beides sind Maßnahmen, die das Verletzungsrisiko für den Beifahrer deutlich senken.

In diesem Zusammenhang kann auch die Positionierung des Airbags in der Instrumententafel eine gewisse Rolle spielen, wobei es besonders günstig ist, wenn der Airbag möglichst weit ausgebreitet untergebracht wird.

Der Airbag selbst wird erfindungsgemäß unterhalb der Abdeckung in einer Aufnahme untergebracht, die ein im Träger integriertes Teil oder ein gesondertes und mit diesem verbundenes Teil sein kann. Der Airbag kann daher gemäß der Erfindung direkt unterhalb der Abdeckung untergebracht werden, ein Schusskanal ist nicht mehr erforderlich.

Um den Airbag im gefalteten bzw. gerollten Zustand möglichst optimal in der Aufnahme unterbringen zu können, kann vorgesehen werden, diese mit zumindest einer Vertiefung zu versehen.

Gemäß der gegenständlichen Erfindung stehen für die Positionierung des Gasgenerators verschiedene Möglichkeiten zur Verfügung. So kann der Gasgenerator innerhalb des Trägers, insbesondere in der Aufnahme, beispielsweise in einem vertieften Bereich derelben, untergebracht werden.

Alternativ dazu kann der Gasgenerator jedoch auch außerhalb des Trägers angeordnet werden, beispielsweise von außen am Träger oder an der Aufnahme oder auch an einem anderen Fahrzeugteil befestigt werden. Hier steht eine Vielzahl von Möglichkeiten offen, wodurch leicht auf die jeweiligen baulichen Gegebenheiten des Fahrzeuges Rücksicht genommen werden kann.

Bei einer weiteren erfindungsgemäßen Maßnahme ist vorgesehen, dass der Träger bzw. die Aufnahme für den Airbag zumindest außenseitig mit Verstärkungsrippen oder dergleichen versehen werden. Eine derartige Maßnahme kann ein gesondertes Abstützen des Gasgenerators, wenn dieser im Trägerbereich oder im Bereich der Aufnahme für den Airbag untergebracht ist, unnötig machen.

Was die flexible Ausführung der Abdeckung bzw. des aufreißbaren Bereiches betrifft, gibt es auch hier eine Anzahl von Möglichkeiten. Es werden jedoch insbesondere solche Ausführungen getroffen werden, die in den üblichen Aufbau von Innenverkleidungsteilen, insbesondere Instrumententafeln, passen oder an diesen leicht angepasst werden können. So ist beispielsweise bei möglichen Ausführungsvarianten vorgesehen, dass die Abdeckung bzw. der aufreißbare Bereich derselben aus einer Deckschicht, insbesondere aus Kunststoff, die gegebenenfalls innenseitig mit einer Schaumstoffschicht versehen ist, aus einem Laminat oder dergleichen besteht.

Bei einer anderen möglichen Ausführung kann die Abdeckung bzw. der aufreißbare Bereich derselben mit einem Teil des Airbags sogar flächig in Verbindung stehen. Dies kann beispielsweise aus herstellungstechnischen Gründen günstig sein, beeinflußt jedoch nicht, insbesondere durch die Flexibilität der Abdeckung, die Funktion des Airbags.

Insbesondere bei einer Ausführung der Abdeckung aus einer Kunststoff-Außenhaut mit einer Schaumstoffschicht ist es aus herstellungstechnischen Gründen und aus Gründen der Funktionalität günstig, wenn der in der Aufnahme positionierte Airbag außenseitig mit einer Folie abgedeckt ist.

Gerade bei einem erfindungsgemäß ausgeführten und integrierten Airbag-System ist es möglich und auch von Vorteil, wenn der Airbag nicht nur an einer sondern an mehreren Stellen mit Gas befüllbar ist. Dadurch kann eine Steuerung des Aufblasverhaltens des Airbags erfolgen.

Es wird daher auch vorgesehen, dass der Airbag entweder vom Gasgenerator direkt oder mittels einer Gasführung oder über ein System von Gasführungen und/oder Leitungen oder auch über ein Gasverteilungssystem mit Gas befüllbar sein kann.

Für eine gute Abstimmung des in der Aufnahme positionierten Airbags mit dem durch Aufreißlinien gebildeten aufreißbaren Bereich ist es günstig, wenn die Aufreißlinien in der Abdeckung zumindest zum Teil und zumindest im Wesentlichen der Außenkontur der Aufnahme für den Airbag folgen. Dabei sind U-förmig verlaufende Aufreißlinien gerade für den Fall, wo das erfindungsgemäße Airbag-System in der Instrumententafel für den Beifahrer untergebracht ist, die bevorzugte Form.

Weitere Merkmale, Vorteile und Einzelheiten der Erfindung werden nun unter Bezug auf die Zeichnung, die mehrere Ausführungsbeispiele anhand schematischer Darstellungen veranschaulicht, näher beschrieben. Dabei zeigen
Fig. 1 eine erste Ausführungsform der Erfindung, wobei ein Querschnitt durch eine Instrumententafel in jenem Bereich, wo ein Airbag-System für den Beifahrer untergebracht ist, dargestellt ist,
Fig. 2 in einem zu Fig. 1 analogen Querschnitt eine Variante des in Fig. 1 dargestellten Ausführungsbeispieles der Erfindung,
Fig. 3 und Fig. 4 weitere Ausführungsbeispiele der Erfindung anhand von Querschnitten durch Instrumententafelbereiche,
Fig. 3a die Ausführungsform aus Fig. 3, ebenfalls im Querschnitt, unmittelbar nach einem Auslösen des Airbags und
Fig. 5a bis 5c verschiedene Stadien während des Ablösens der äußeren Abdeckung durch den sich füllenden Airbag.

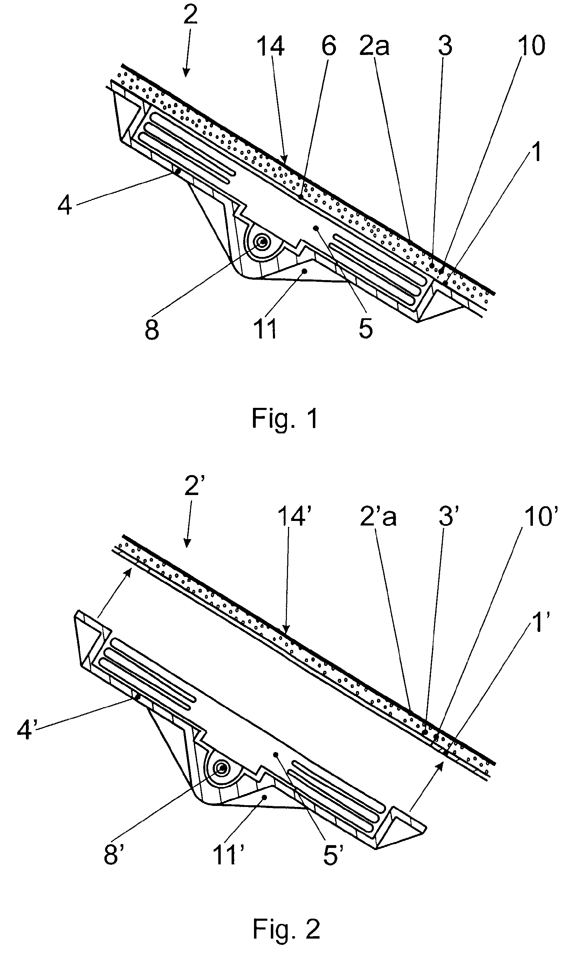

In den Zeichnungsfiguren ist als Beispiel für ein Innenverkleidungsteil eine Instrumententafel dargestellt. Die dargestellte Instrumententafel weist, wie aus Fig. 1 bis 4 ersichtlich ist, einen üblichen geschäumten Aufbau mit einem ihre Innenseite bildenden Träger 1, 1', 1" einer Decksicht 2a, 2'a, 2"a und einer dazwischen befindliche Schaumstoffschicht 3, 3', 3" auf. Außerhalb jenes Bereiches, wo ein Airbag-System in noch zu beschreibender Weise untergebracht ist, sind der Träger 1, 1', 1" und die Deckschicht 2a, 2'a, 2"a über die Schaumstoffschicht 3, 3', 3", miteinander großflächig in Kontakt stehend, verbunden.

Bei derart aufgebauten Instrumententafeln ist üblicherweise der Träger 1, 1', 1" ein formstabiles Kunststoffteil, das insbesondere im Spritzguss hergestellt ist. Die Deckschicht 2a, 2'a, 2"a besteht aus einem flexibleren Kunststoff und wird beispielsweise nach einem Slushverfahren, einem Sprühverfahren oder durch Tiefziehen hergestellt. Die Deckschicht 2a, 2'a, 2"a ist somit weicher ausgeführt als der Träger 1, 1', 1" und weist die dem Fahrgastraum zugewandte Außenseite, die meist dekorativ ausgeführt ist, auf. Die Deckschicht 2a, 2'a, 2"a kann auch aus Leder oder einem anderen Material bestehen.

Bei der Ausführungsform gemäß Fig. 1 ist der Träger 1 mit einer relativ großflächigen, flachen und wannenförmigen Aufnahme 4 für einen Airbag 5 versehen. Im Bereich oberhalb der Aufnahme 4 bildet die Deckschicht 2a gemeinsam mit der Schaumstoffschicht 3 die Abdeckung 2 für den Airbag. Bei der Ausführungsform gemäß Fig. 1 ist die wannenförmige Aufnahme 4 Bestandteil des Trägers 1 und ein mit dem Träger 1 bei der Herstellung desselben mitgeformtes Teil. Der Träger 1 kann außenseitig im Bereich der Aufnahme 4 mit verstärkenden Strukturen, beispielsweise mit Verstärkungsrippen 11, versehen sein. Die Aufnahme 4 kann, in Draufsicht betrachtet, nahezu beliebig gestaltet sein, insbesondere oval oder annähernd kreisoder rechteckförmig, was aber aus der Zeichnung nicht ersichtlich ist.

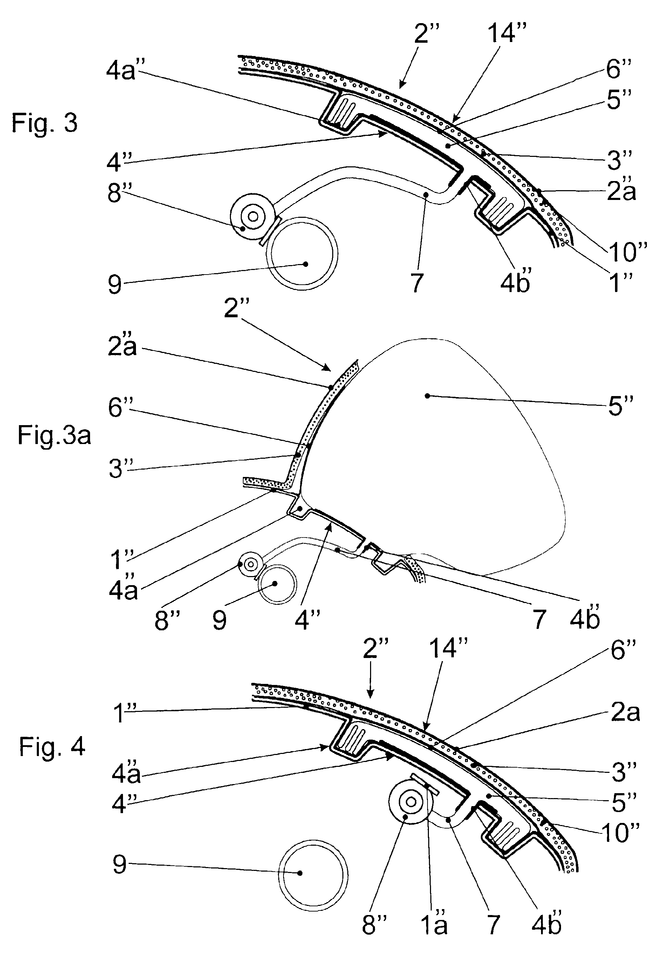

Der in die Aufnahme 4 eingelegte Airbag 5 ist gefaltet und außenseitig mit einer dünnen Folie 6, insbesondere aus Kunststoff, die die Aufnahme 4 überdeckt, versehen. Anstelle einer Folie kann eine andere Art der Trennung des Airbags 5 von der Schaumstoffschicht 3 vorgesehen werden. In einer hier etwa mittig ausgebildeten Vertiefung 4c der Aufnahme 4 ist der Gasgenerator 8 untergebracht. Der Gasgenerator 8 kann jedoch auch außerhalb der Aufnahme 4 angeordnet werden, beispielsweise auf eine Art, wie sie weiter unten anhand der Ausführungsbeispiele gemäß Fig. 3 und 4 beschrieben ist. Das Befüllen des Airbags 5 mit Gas kann bei der dargestellten Unterbringung des Gasgenerators 8 ohne besondere Leitungen, also direkt durch den Gasgenerator 8, erfolgen.

In der Abdeckung 2 sind Aufreißlinien 10 vorgesehen, die jenen Bereich 14 definieren, der im Auslösfall durch den Airbag 5 geöffnet wird. Die Aufreißlinien 10 werden insbesondere durch Materialschwächungen gebildet, die in der Deckschicht 2a und/oder in der Schaumstoffschicht 3 vorgesehen werden können. Im Falle eines Auslösens des Airbags 5 geht daher die Abdeckung 2 im Bereich 14 auf. Die Aufreißlinien 10 können beispielsweise U-förmig verlaufen, was bei den dargestellten Ausführungsformen der Fall ist, wobei im Schnitt nur der verbindende Abschnitt des U's zu sehen ist, welcher etwa entlang des unteren Randbereiches der Aufnahme 4 verläuft. Die seitlichen Schenkel, die insbesondere entlang der nicht dargestellten Seitenbereiche der Aufnahme 4 verlaufen, sind nicht ersichtlich. Die Aufreißlinien 10 können auch andere Formen annehmen, etwa rund oder oval, oder als simple Linie oder in der Form eines H ausgebildet sein. U-förmig verlaufende Aufreißlinien 10 bilden einen einzigen definierten Aufreißbereich 14 in der Abdeckung 2, H-förmig verlaufende bilden zwei Aufreißbereiche. U-förmige und H-förmige Aufreißlinien werden bevorzugt so angeordnet, dass bei eingebauter Instrumententafel die seitlichen Schenkel senkrecht zur Fahrzeugquerrichtung verlaufen, wobei bei einer U-Form die offenen Enden der Schenkel vom Beifahrer weiter weg zeigen sollten. Der bzw. die Bereiche zwischen den Schenkelenden, wo keine Aufreißlinien sind, bilden jene(n) Bereich(e), wo beim Auslösen des Airbags 5 und Ablösens des oder der durch die Aufreißlinien gebildeten Bereiche 14 der Abdeckung 2 eine Verbindung zum übrigen Bereich der Abdeckung 2 bzw. zum Innenverkleidungsteil erhalten bleibt. Hier können, müssen aber nicht, zusätzliche gestalterische Maßnahmen getroffen werden, damit diese bzw. dieser Verbindungsbereich(e) eine Scharnierfunktion übernimmt bzw. übernehmen. Bevorzugt wird ein Scharnier dort gebildet, wo die Abdeckung 2 bereits wieder mit dem Träger 1 verbunden ist. Die gebildeten Scharniere oder Gelenke können in bekannter Weise ausgeführt sein und es können als Unterstützung ihrer Funktion verstärkende Materialien, beispielsweise Netze, Gewebe oder Folien, eingebracht sein.

Der Träger 1 kann im Spritzgussverfahren oder nach einem anderen Verfahren mitsamt der Aufnahme 4 hergestellt werden. In den fertigen Träger 1 wird das Airbagmodul insbesondere bereits mit vorgefaltetem Airbag 5 in die Aufnahme 4 gelegt. Die Art der Faltung des Airbags 5 erfolgt dabei bevorzugt derart, dass der Airbag 5 großflächig und insbesondere unter Vermeidung von Unebenheiten an seiner Oberseite eingelegt wird. Anschließend werden die Aufnahme 4 und mit ihr der Airbag 5 von außen durch die dünne Folie 6 abgedeckt, die am Rand der Aufnahme 4 mit der Innenseite des Trägers 1 verbunden wird. Zu diesem Zweck kann die Folie 6 an ihren Randbereichen selbstklebend ausgeführt sein oder mit dem Träger 1 gesondert verklebt werden. Durch die Folie 6 wird die Dichtheit beim nachfolgenden Schäumvorgang sichergestellt. Die Deckschicht 2a und der Träger 1 werden in ein Schaumwerkzeug eingelegt und der zwischen diesen Bauteilen verbleibende Raum wird mit Schaum gefüllt. Die fertige Instrumententafel wird dem Werkzeug entnommen und auf übliche Weise im Fahrzeug montiert.

Die die Aufreißlinien 10 bildenden Materialschwächungen können in der Abdeckung 2 so gebildet werden, dass die Deckschicht 2a örtlich in verringerten Dicke hergestellt wird, dass die Deckschicht 2a perforiert wird oder ein- bzw. durchschnitten wird. Die Aufreißlinien 10 können daher bereits bei der Herstellung der Deckschicht 2a durch einen Steg oder dergleichen in der Form mitgebildet werden oder nachträglich in der fertigen Deckschicht 2a beispielsweise durch Einschneiden mittels eines Messers oder Lasers, erstellt werden. Dabei können die Einschnitte von außen oder von innen angebracht werden, die Schaumstoffschicht 3 kann mit erfasst werden oder ungeschwächt belassen werden.

Bei der in Fig. 2 gezeigten Ausführungsform ist vorgesehen, dass die zur Aufnahme des Airbags 5' vorgesehene wannenförmige Aufnahme 4' ein vom Träger 1' separat hergestelltes Teil bildet. Dies hat den Vorteil, dass die Aufnahme 4' auch aus einem anderen Material als der Träger 1' bestehen kann, beispielsweise aus einem anderen Kunststoff oder aus Metall. Der Bereich oberhalb der Aufnahme 4' bildet eine aus der Deckschicht 2'a und der Schaumstoffschicht 3' bestehende Abdeckung 2'. Auch bei dieser Ausführungsform kann der Gasgenerator 8' in der Aufnahme 4' in einer Vertiefung 4'c untergebracht sein.

Die wannenförmige Aufnahme 4' wird mit dem eingelegten, gefalteten Airbag 5' und dem positionierten Gasgenerator 8' an der Unterseite des Trägers 1' befestigt, beispielsweise mit diesem verschraubt. Dies ist durch die beiden Pfeile in Fig. 2 angedeutet. Die Verbindung kann auch durch Kleben, Schweißen, mittels Nieten oder Klipse etc. erfolgen. Auch bei dieser Ausführung können an der Außenseite der Aufnahme 4' Verstärkungsrippen 11' oder dergleichen vorgesehen werden. Die vorgesehenen Aufreißlinien 10' können wie oben anhand der Fig. 1 beschrieben ist ausgeführt werden.

Wird bei dieser Ausführung der Gasgenerator außerhalb der Aufnahme 4' angeordnet, kann er beispielsweise an der Unterseite der Aufnahme 4' oder am Querträger oder einem anderen geeigneten Fahrzeugteil befestigt sein. Falls es erforderlich ist, kann eine gesonderte Abstützung jenes Bauteiles vorgenommen werden an dem der Gasgenerator an- bzw. untergebracht ist, beispielsweise durch Stützelemente, die dieses Bauteil mit einem Fahrzeugteil - dem Querträger oder dergleichen - verbinden.

Je nachdem, wo der Gasgenerator 8' positioniert wird, kann bei dieser Ausführung eine Gaszuführung erforderlich sein, die beispielsweise gemäß dem weiter unten beschriebenen in Fig. 3 und 4 gezeigten Ausführungsbeispielen erfolgen kann.

Bei einer nicht dargestellten Ausführungsform der Erfindung kann in der Aufnahme unterhalb des Airbags ein gesonderter Gasverteilungskasten vorgesehen werden, in den das Gas aus dem Gasgenerator einströmt, bevor es in den Airbag gelangt. Der Zwischenboden zwischen dem Gasverteilungskasten und der Aufnahme wird mit durchgehenden Öffnungen versehen, durch die der Gasstrom in bestimmte Bereiche des Airbags strömt.

Bei dem in Fig. 3 dargestellten Ausführungsbeispiel ist eine im Träger 1" integrierte Aufnahme 4" vorgesehen, die im Randbereich mit nutartigen Vertiefungen 4"a versehen ist, mit der zusätzlicher Raum zur Unterbringung von Faltungen des Airbags 5" geschaffen wird. Vertiefte Bereiche können dabei an beliebigen Stellen und in beliebiger Form vorgesehen werden. Selbstverständlich kann auf besondere Vertiefungen zur Aufnahme von Airbag-Faltungen auch verzichtet werden. Der in die Aufnahme 4" eingelegte Airbag 5" ist auch bei dieser Ausführungsform außenseitig mit einer dünnen Folie 6, insbesondere aus Kunststoff, die über die Ränder der Aufnahme 4" hinaus reicht, abgedeckt. Der Airbag 5" ist über eine hier als Leitung eingezeichnete Gasführung 7 mit einem außerhalb des Trägers 1" angeordneten Gasgenerator 8" verbunden. Zu diesem Zweck ist im Träger 1" im Bereich der Aufnahme 4" an geeigneter Stelle eine Öffnung 4"b frei gelassen. An Stelle einer Öffnung 4"b können mehrere Öffnungen für von der Gasführung 7 abzweigende oder für zusätzliche Leitungen bzw. Gasführungen angeordnet werden, die dafür vorgesehen werden können, den Airbag 5" optimal mit Gas zu befüllen. Der Gasgenerator 8" ist beispielsweise an jenem Querträger 9 befestigt, welcher die Verbindung der Instrumententafel zum Fahrzeug herstellt.

Die in Fig. 4 dargestellte Ausführungsform entspricht bis auf die Anordnung des Gasgenerators 8" jener gemäß Fig. 3. Der Gasgenerator 8" ist hier an zumindest einem Teil 1"a des Trägers 1", insbesondere im Bereich der Unterseite der Aufnahme 4", vormontiert. Das oder die Teil(e) 1"a können bei der Herstellung des Trägers 1" mitgeformt werden. Beim Einbau der Instrumententafel in das Fahrzeug kann nun der Gasgenerator 8" über entsprechende Befestigungsteile zusätzlich mit dem Querträger 9 verbunden werden bzw. an diesem befestigt werden. In diesem Fall bilden der Airbag 5", der Gasgenerator 8" und etwaige Zu- bzw. Verteilungsleitungen 7 zu definierten Bereichen des Airbags 5 eine vormontierte Einheit.

Auch bei den Ausführungen gemäß Fig. 3 und 4 sind Aufreißlinien 10" vorgesehen, die wie oben beschrieben ausgeführt sein können.

Fig. 3a zeigt das Airbag-System aus Fig. 3 mit ausgelöstem und somit befüllten Airbag 5", wo auch ersichtlich ist, dass der durch die oben beschriebenen U-förmigen Aufreißlinien 10" gebildete Bereich 14" der Abdeckung 2" geöffnet ist.

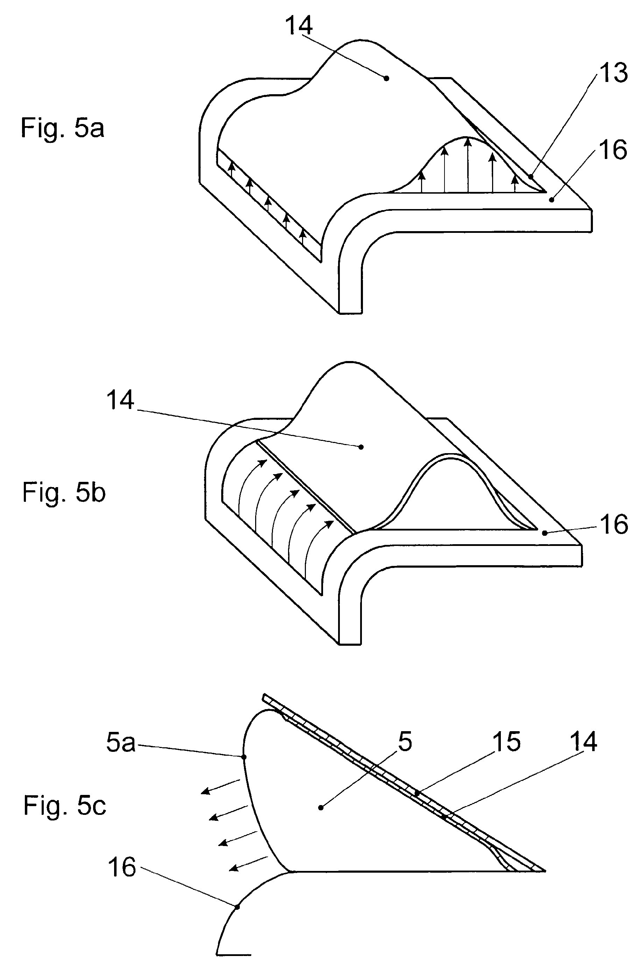

Anhand der Fig. 5a bis 5c wird nun beispielhaft das Öffnungs- und Aufblasverhalten eines erfindungsgemäß ausgeführten Airbag-Systems beschrieben. In diesen Zeichnungsfiguren wird dabei von U-förmig verlaufenden Aufreißlinien ausgegangen. Der Verbindungsbereich 13 zwischen dem sich ablösenden Bereich 14 und dem ortsfest verbleibenden Teil der Instrumententafel 16 ist durch eine Linie angedeutet. Dieser Verbindungsbereich 13 sollte sich, vom Fahrzeuginsassen, dem Beifahrer, möglichst weit weg befinden. Der Airbag, der in Fig. 5a und 5b nicht dargestellt ist, wird bevorzugt so befüllt, dass er sich zuerst in einem Bereich, der möglichst weit weg vom Fahrzeuginsassen liegt, aufbläst. In einem anfänglichen Stadium des Aufblasens bzw. Entfaltens erfolgt, wie es Fig. 5a zeigt, von unten her ein Ausbeulen bzw. Auswölben des flexiblen ablösbaren Bereiches 14, was gleichzeitig mit einem Lösen des Bereiches 14 im Bereich der Materialschwächungen einhergeht, wobei ein Wegziehen des Bereiches 14 von der Beifahrerposition erfolgt. Die Pfeile in Fig. 5a veranschaulichen schematisch den Bewegungsablauf während dieser ersten Phase.

Fig. 5b zeigt ein weiteres Stadium während des Öffnens bzw. des Ablösens des Bereiches 14. Der Bereich 14 wird, wie erwähnt, von der Beifahrerposition aus betrachtet, durch den sich aufblasenden und entfaltenden Airbag vom Beifahrer weggezogen. Das weitere Wachstum des Airbags erfolgt unter Ausbildung einer vergleichsweise ebenen und großflächigen Airbagwand in Richtung Beifahrer. Eine großflächige Ausbreitung des gefalteten Airbags ist für das erwünschte "Füllverhalten" des Airbags von Vorteil. Wie Fig. 5c zeigt, kann sich auch die Anordnung des Airbagssystems im Fahrzeug bzw. an der Instrumententafel günstig auswirken. Erfolgt nämlich die Anordnung derart, dass das Airbag-System und somit insbesondere auch der ablösende Bereich 14 desselben nahe der Windschutzscheibe 15 untergebracht wird, so unterstützt die Windschutzscheibe 15, an der der Bereich 14 schließlich zur Anlage kommt, das erwünschte Wachstum unter Begünstigung der Ausbildung einer Airbagwand in Richtung Beifahrer. Die Pfeilschar in Fig. 5c verdeutlicht die sich auf den Fahrzeuginsassen zu bewegende "Airbagwand".

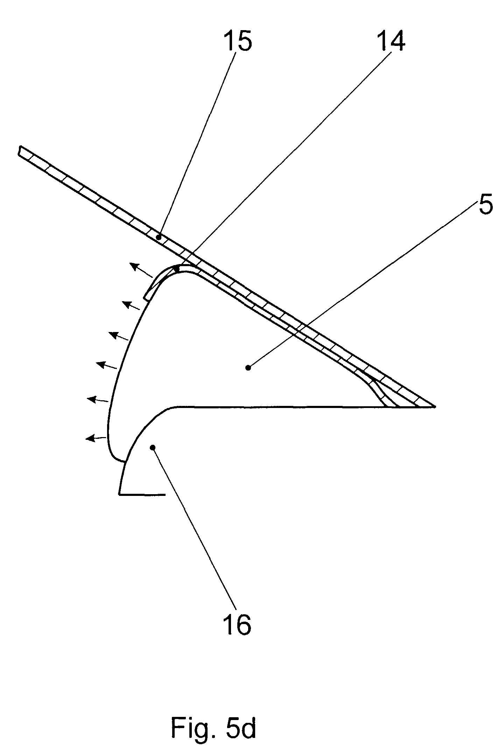

Fig. 5d zeigt eine Variante der in Fig. 5c gezeigten Phase des Auslösens bzw. Aufblasens des Airbags 5. Bei dieser Variante legt sich der Airbag 5 großvolumig auch über den nach unten weisenden Bereich der Instrumententafel 16. Die Pfeilschar verdeutlicht die entstehende "Airbagwand".

Es hat sich herausgestellt, dass zum Auslösen des Airbags eines erfindungsgemäßen Airbag-System weniger Energie erforderlich ist als bei herkömmlichen Airbag-Modulen. Das geschilderte Aufblasverhalten und der beschriebene "Zieh-Effekt" werden, wie oben erwähnt, durch ein Anblasen des Airbags in einer Position möglichst weit weg vom Insassen unterstützt. Dabei können gerade durch das geschilderte bevorzugte Aufblasverhalten und den "Zieh-Effekt" Verletzungen eines Fahrzeuginsassens, der sich in einer Unfallsituation "Out of Position", beispielsweise in einer nach vorne gebeugten Position, befindet, vermieden werden.

Die Erfindung ist auf die dargestellten und beschriebenen Ausführungsformen nicht eingeschränkt. So ist es beispielsweise möglich, auf eine Materialschwächung zur Bildung eines definierten ablösbaren Bereiches zu verzichten. Das Aufblasverhalten des Airbags kann so eingestellt werden, dass die weiche, flexible und auch vergleichsweise dünne Abdeckung oberhalb des Airbags auch ohne Materialschwächungen aufreißt. Auch in diesem Fall ist das Verletzungsrisiko herabgesetzt, da keine harten Teile vorhanden sind, die einen Fahrzeuginsassen treffen könnten. Es ist ferner auch möglich, die äußere Abdeckung bzw. den ablösbaren Bereich lediglich aus einer weichen und flexiblen Außenhaut aus Kunststoff, ohne Schaumstoffschicht, zu bilden. Es kann bzw. können aber auch an Stelle einer Schaumstoffschicht eine oder mehrere Vliesschicht(en) oder Schichten aus anderen Materialien vorgesehen werden. Der Airbag kann ferner in der wannenförmigen Aufnahme in zumindest teilweise gerollter Form untergebracht werden. Auf gesonderte Vertiefungen zum Unterbringen von Airbag-Teilen in der wannenförmigen Aufnahme kann gänzlich verzichtet werden bzw. es können solche Vertiefungen an beliebigen Stellen und in beliebiger Form vorgesehen werden.

## Patentansprüche

1. In ein Innenverkleidungsteil für Kraftfahrzeuge, insbesondere eine Instrumententafel (16), integriertes Airbag-System mit einem mittels eines Gasgenerators (8, 8', 8") aufblasbaren Airbag (5, 5'. 5"), wobei das Innenverkleidungsteil zumindest aus einem formstabilen Träger (1, 1', 1") besteht und eine sich unter dem Druck des sich mit Gas befüllenden Airbags (5, 5', 5") nach außen öffnende Airbag-Abdeckung (2, 2', 2") aufweist, dadurch gekennzeichnet, dass die Airbag-Abdeckung (2, 2', 2") flexibel und dem Druck des sich befüllenden Airbags (5, 5', 5") nachgebend ausgeführt ist, und dass der Airbag (5, 5', 5") unterhalb der Abdeckung (2, 2', 2") in einer mit dem Träger (1, 1', 1") verbundenen Aufnahme (4, 4', 4") angeordnet ist.

2. Airbag-System nach Anspruch 1, dadurch gekennzeichnet, dass die Airbag-Abdeckung (2, 2', 2") mit Aufreißlinien (10, 10', 10") zur Bildung eines definierten aufreißbaren Bereiches (14, 14', 14") versehen ist.

3. In ein Innenverkleidungsteil für Kraftfahrzeuge, insbesondere eine Instrumententafel (16), integriertes Airbag-System mit einem mittels eines Gasgenerators (8, 8', 8") aufblasbaren Airbag (5, 5', 5"), wobei das Innenverkleidungsteil eine Airbag-Abdeckung (2, 2', 2") mit zumindest einem sich unter dem Druck des sich mit Gas befüllenden Airbags (5, 5', 5") nach außen öffnenden durch Aufreißlinien (10, 10', 10") definierten, aufreißbaren Bereich (14, 14', 14") aufweist, dadurch gekennzeichnet, dass die Airbag-Abdeckung (2, 2', 2") bzw. der aufreißbare Bereich (14, 14', 14") derart flexibel ausgeführt ist, dass der Airbag (5, 5', 5") die Abdeckung (2, 2', 2") bzw. den aufreißbaren Bereich (14, 14', 14"), insbesondere unter Bildung einer Auswölbung, anhebt und entlang der Aufreißlinien (10, 10', 10") abzieht.

4. In die Instrumententafel (16) eines Kraftfahrzeuges integrierten Airbag-System für den Beifahrer nach Anspruch 3, dadurch gekennzeichnet, dass das Abziehen des aufreißbaren Bereiches (14, 14', 14") in eine Richtung weg vom Beifahrer erfolgt.

5. Airbag-System nach Anspruch 3 oder 4, dadurch gekennzeichnet, dass zumindest die erste Phase des Befüllens und Entfaltens des Airbags (5, 5', 5") überwiegend in einem vom Beifahrer entfernten Bereich erfolgt.

6. Airbag-System nach einem der Ansprüche 3 bis 5, dadurch gekennzeichnet, dass der Airbag (5, 5', 5") weitgehend ausgebreitet untergebracht ist.

7. Airbag-System nach einem der Ansprüche 1 bis 6, dadurch gekennzeichnet, dass der Airbag (5, 5', 5") unterhalb der Abdeckung (2, 2', 2") in eine im Träger (1, 1', 1") integrierten oder mit diesem verbundenen, insbesondere wannenförmigen, Aufnahme (4, 4', 4") eingelegt ist.

8. Airbag-System nach einem der Ansprüche 1 bis 7, dadurch gekennzeichnet, dass die Aufnahme (4") mit zumindest einer Vertiefung (4"a) zum Einlegen des insbesondere gefalteten oder gerollten Airbags (5") oder von Teilen desselben versehen ist.

9. Airbag-System nach einem der Ansprüche 1 bis 8, dadurch gekennzeichnet, dass der Gasgenerator (8, 8') innerhalb des Trägers (1, 1'), insbesondere im Bereich der Aufnahme (4, 4'), vorzugsweise in einem vertieften Teil derselben, untergebracht ist.

10. Airbag-System nach einem der Ansprüche 1 bis 9, dadurch gekennzeichnet, dass der Gasgenerator (8") außerhalb des Trägers (1") angeordnet ist, beispielsweise von außen am Träger (1") oder an der Aufnahme (4") oder an einem Fahrzeugteil befestigt ist und gegebenenfalls an einem Fahrzeugteil abgestützt ist.

11. Airbag-System nach einem der Ansprüche 1 bis 10, dadurch gekennzeichnet, dass der Träger (1, 1') bzw. die Aufnahme (4, 4') derart ausgebildet ist, dass er bzw. sie Reaktionskräfte aufnehmen kann, beispielsweise indem der Träger (1, 1') bzw. die Aufnahme (4, 4') zumindest außenseitig mit Verstärkungsrippen (11, 11') oder dergleichen versehen ist.

12. Airbag-System nach einem der Ansprüche 1 bis 11, dadurch gekennzeichnet, dass die Abdeckung (2, 2', 2") bzw. der aufreißbare Bereich (14, 14', 14") derselben zumindest aus einer Deckschicht (2a, 2'a, 2"a), insbesondere aus Kunststoff, die gegebenenfalls innenseitig mit einer Schaumstofffschicht (3) versehen ist, besteht.

13. Airbag-System nach einem der Ansprüche 1 bis 12, dadurch gekennzeichnet, dass die Abdeckung bzw. der aufreißbare Bereich derselben mit einem Teil des Airbags flächig in Verbindung steht.

14. Airbag-System nach einem der Ansprüche 1 bis 13, dadurch gekennzeichnet, dass der in der Aufnahme (4, 4") positionierte Airbag (5, 5") außenseitig mit einer Folie (6, 6") abgedeckt ist.

15. Airbag-System nach einem der Ansprüche 1 bis 14, dadurch gekennzeichnet, dass der Airbag (5, 5', 5") an einer oder an mehreren Stellen mit Gas befüllbar ist.

16. Airbag-System nach einem der Ansprüche 1 bis 15, dadurch gekennzeichnet, dass der Airbag (5, 5', 5") vom Gasgenerator direkt oder über eine einzige Gasführung, ein System von Gasführungen und/oder Leitungen oder ein Gasverteilungssystem mit Gas befüllbar ist.

17. Airbag-System nach einem der Ansprüche 1 bis 16, dadurch gekennzeichnet, dass die Aufreißlinien (10, 10', 10") in der Abdeckung (2, 2', 2") zumindest zum Teil und zumindest im Wesentlichen der Außenkontur der Aufnahme (4, 4', 4") für den Airbag (5, 5', 5") folgen und vorzugsweise U-förmig verlaufen.
